# FASCICULE DE BREVET EUROPEEN

(11) **EP 3 638 577 B1**
(45) Date de publication et mention de la délivrance du brevet: **06.04.2022**
(21) Numéro de dépôt: 18731096.6
(22) Date de dépôt: 18.06.2018
(51) Int. Cl.: B62M 6/60, B62M 6/45, B62M 6/90, B62J 43/13, B62M 9/02, B62L 5/00

(54) **VÉLO ÉLECTRIQUE À CHAÎNE DE TRANSMISSION ÉLECTRIQUE PARALLÈLE À CELLE DE PÉDALAGE ET PROCÉDÉS DE FONCTIONNEMENT ASSOCIÉS**
ELEKTRISCHES FAHRRAD MIT EINER ELEKTRISCHEN ÜBERTRAGUNGSKETTE PARALLEL ZU EINER PEDALÜBERTRAGUNGSKETTE UND ZUGEHÖRIGE BETRIEBSVERFAHREN
ELECTRIC BICYCLE HAVING AN ELECTRIC TRANSMISSION CHAIN PARALLEL TO A PEDALING TRANSMISSION CHAIN, AND ASSOCIATED OPERATING METHODS

(30) Priorité: 16.06.2017 FR 1755510
(43) Date de publication de la demande: 22.04.2020
(73) Titulaire: Whattfornow, 74650 Chavanod (FR)
(72) Inventeur: VITIELLO, Florent, 30190 Sainte Anastasie (FR); GUERS, François, 74540 Gruffy (FR)
(74) Mandataire: Nony
(86) Numéro de dépôt international: PCT/EP2018/066141
(87) Numéro de publication internationale: WO 2018/229302

(56) Documents cités:
- WO-A1-2018/104633
- DE-A1-102010 026 810
- DE-A1-102010 031 437
- DE-U1-202016 104 737
- FR-A1- 2 411 302
- GB-A- 2 093 780
- JP-A- H05 278 670
- JP-U- S5 646 494
- US-A1- 2002 084 134
- US-A1- 2004 231 905
- US-A1- 2012 239 235

## Description

### Domaine technique

La présente invention concerne le domaine des vélos électriques, c'est-à-dire qui embarquent un moteur électrique et une batterie d'alimentation du moteur.

Elle a trait plus particulièrement aux vélos électriques, destinés à un usage sportif, notamment les vélos tous terrains (VTT) avec lesquels on souhaite ponctuellement passer des pentes très raides ou encore franchir des obstacles naturels.

L'invention vise à dépasser les limites des modes de fonctionnement des vélos électriques actuels, et donc à offrir une gamme de modes de pilotage plus étendue, notamment du pilotage en direct/instantané par l'utilisateur.

### Art antérieur

Un vélo dit à assistance électrique, tel qu'il existe actuellement, est un vélo à mécanisme de pédalage classique sur lequel ont été ajoutés les composants suivants:
- un moteur électrique agencé dans la roue avant, la roue arrière, ou à proximité du pédalier, qualifié usuellement de "moteur central" dans ce cas;
- une batterie d'alimentation du moteur électrique;
- une unité électronique de contrôle-commande qui permet de réguler le pilotage (fonctionnement) des différents composants électriques;
- le cas échéant, un boîtier de commande, généralement agencé au niveau du guidon, et qui permet à l'utilisateur de définir un mode d'assistance, de moduler le niveau de son assistance, de connaître son kilométrage....

C'est la directive européenne 2002/24/EC qui fixe en Europe, les critères pour qu'un vélo à assistance électrique puisse circuler sur la voie publique. En particulier, il est précisé que l'assistance ne doit se faire que si le cycliste pédale, et se couper à l'arrêt du pédalage, (mais qu') il est cependant autorisé de mettre en place une assistance au démarrage sans avoir recours au pédalage mais qui ne doit pas excéder 6 km/h.

En pratique, tous les vélos à assistance électrique par entraînement de la roue arrière, qui existent à ce jour, sont conçus avec une transmission du couple moteur qui est en série avec celle du couple de pédalage, de sorte que l'ajout du couple moteur à celui de pédalage et la transmission au moyeu de la roue arrière se font par le biais d'une seule chaîne ou courroie. Ainsi, le moteur rajoute nécessairement un couple à celui du pédalage.

Cette conception présente plusieurs inconvénients majeurs.

Une première difficulté importante vient du fait que la vitesse de rotation optimale des moteurs électriques, bien qu'opérationnels avec un couple important dès leur démarrage à l'arrêt, se situe dans une plage de 300 à 2000 voire 3000 tours/mn, alors que la vitesse de rotation de pédalage que peut exercer durablement un cycliste se trouve entre 20 et 80 tours/mn, tout en évitant les variations discontinues de fréquence. Afin de faire correspondre ces vitesses de rotation, il faut donc intercaler un réducteur de vitesse, après la sortie du moteur puisque celui-ci est en série avec le pédalier. L'ajout d'un réducteur de vitesse entraîne un surpoids, une contrainte géométrique pour l'implantation du moteur et une complexité mécanique supplémentaire.

Un deuxième point récurrent et qui génère des débats, tant pour les utilisateurs que pour les législateurs, se cristallise autour des facteurs et des lois de contrôle pour gérer le fonctionnement du moteur, en l'asservissant à l'action de pédalage de l'utilisateur.

Plusieurs solutions existent pour détecter quand et comment réaliser ce surplus de couple par le moteur électrique.

Tout d'abord, l'assistance peut se faire par une détection de la rotation du pédalier. Un capteur agencé au niveau du pédalier détecte la rotation de celui-ci et donc le pédalage, ce qui permet alors au moteur électrique de fournir son en sus du pédalage.

L'assistance peut également se faire au moyen d'un capteur de pression agencé sur la pédale : le moteur peut démarrer dès qu'il sent la pression exercée sur la pédale. En général, plus l'utilisateur appuie sur les pédales, plus le moteur l'aide, même si sa cadence de pédalage est faible.

En lieu et place d'un capteur de pression, la détection peut être faite par un capteur de couple ou d'effort : c'est souvent une combinaison de l'effort et de la cadence de pédalage qui commande la puissance du moteur. Plus le cycliste pédale à une cadence élevée et/ou plus son effort augmente en exerçant un couple élevé, plus il bénéficie d'une assistance, ceci afin de rester dans une plage de vitesse de rotation et une valeur de couple à fournir confortables pour le cycliste.

Enfin, on trouve des assistances dans lesquelles le couple moteur est évalué à partir de la connaissance de la tension de la chaîne. Ce système est très réactif puisque la chaîne se tend dès que le pied est posé sur la pédale, cela déclenchera donc un démarrage du moteur dès que le pédalier va commencer à tourner.

En ce qui concerne les modes d'assistance qui sont appliqués, on peut dire que les programmes actuels, qui rajoutent donc systématiquement un couple supplémentaire au couple de pédalage, conviennent bien lorsque l'utilisateur se définit un type d'effort sur une durée relativement longue, par exemple en attaquant une montée ou une section assez « roulante ». Ils sont donc bien adaptés à des profils de terrains réguliers.

Lors d'essais réalisés par la déposante sur des VTT à assistance électrique existants, avec des utilisateurs sportifs, à la fois en recherche de plaisir, de sensations mais aussi de challenges (y compris) d'efforts d'endurance, il a été constaté que ceux-ci avaient, lors de passages techniques ponctuels, une très forte tendance à vouloir augmenter le niveau d'assistance au maximum. En réalité, ces utilisateurs se servaient ponctuellement du basculement sur un programme avec plus d'assistance (normalement dédié à un usage plus contraignant) comme d'un accélérateur indirect.

Et quand bien même ils utilisent ce programme d'assistance maximale, les utilisateurs sportifs se sont retrouvés confrontés à des situations dans lesquelles l'assistance du moteur électrique ne leur apporte pas pleinement satisfaction.

Cela est particulièrement prégnant, lorsqu'ils font face subitement à un obstacle ou une pente très raide ou qu'ils désirent démarrer instantanément dans des configurations de pentes extrêmes. L'obligation de devoir pédaler pour avoir l'assistance n'était également pas compatible avec des passages en dévers, sur des racines d'arbre ou encore sur des sentiers creusés dans lesquels les pédales accrochent régulièrement un bord plus élevé.

Au contraire, lors des nombreux passages moins exigeants, ils souhaitaient pouvoir pédaler sans aucune assistance, ce qui n'est pas prévu dans les modes proposés. De plus, le poids des vélos proposés ne permet pas toujours de le faire en pratique et très rarement sur une distance significative.

En outre, la conception en série du moteur électrique avec la transmission par pédalage induit des inconvénients majeurs que l'on peut énumérer comme suit.

Tout d'abord, il peut y avoir des casses ou usures prématurées de la transmission (chaine, pignons, roue libre, ...), car celle-ci n'est pas conçue à l'origine pour transmettre des couples importants du moteur, ce qui s'avère particulièrement vrai dans les situations décrites ci-dessus.

Ensuite, un utilisateur peut éprouver des difficultés importantes à changer les rapports de vitesses lorsque le moteur électrique est en marche et apporte du couple, car il applique une tension importante sur la chaine. Une solution connue consiste à prévoir des coupures d'alimentation pour réussir ces changements de vitesse, mais ce n'est ni performant ni confortable à l'usage, puisque cela induit des discontinuités dans la vitesse et dans l'effort de l'utilisateur, sans oublier les chocs créés entre les éléments mobiles de la chaine de transmission (chaine, pignons, dérailleur, ...).

Pour satisfaire au mieux les utilisateurs, en particuliers sportifs, certains modèles de vélos à assistance électrique ou de cyclomoteurs proposent un système d'accélérateur par poignée ou gâchette qui permet d'apporter à la roue arrière le couple moteur, sans qu'il soit nécessaire pour l'utilisateur de pédaler.

Ces modèles mettant toujours en œuvre, soit un moteur à la roue arrière qui, par son poids excentré important, se révèle à l'usage très peu adapté aux évolutions en tous terrains, soit une transmission du couple moteur nécessairement en série avec le pédalage, les mêmes inconvénients et limitations qu'évoquées précédemment subsistent.

Il a déjà été proposé des moteurs-roues pour l'assistance électrique des vélos, c'est-à-dire des ensembles avec un moteur électrique incorporé dans la roue en général arrière de vélos. L'utilisation de moteurs roues est une solution intéressante qui permet d'avoir une transmission du couple issu du moteur en parallèle du couple issu du pédalage. Le mécanisme de transmission du moteur roue est par construction très simplifié puisque directement greffé dans le moyeu de la roue arrière. Il comprend souvent le moteur et un réducteur, ce qui constitue déjà un poids important et une inertie en rotation également très élevée. Ce poids et inertie importants ont une influence négative dans la maniabilité du vélo, en particulier lorsque le pilotage doit être précis et rapide. Le poids de plusieurs kilos ajoutés à la roue arrière se ressent encore plus lorsque le vélo n'est pas sur le sol, lors du portage par exemple, mais aussi dans des franchissements où il faut faire décoller la roue arrière et également dans les sauts d'obstacles très présents dans la pratique du vélo tous terrains. C'est enfin, un inconvénient majeur lorsqu'on veut pédaler en danseuse pendant des montées exigeantes, puisqu'une faible inertie du vélo sous le cycliste est un facteur d'efficacité très important.

C'est ainsi que pour la majorité des pratiques, mise à part une utilisation à vitesse modérée sur route ou en ville où on peut pédaler sans forcer et assis sur la selle, l'implantation des moteurs électriques dans la partie centrale des vélos s'est généralisée. Un particulier a déjà proposé une conception de vélo à assistance électrique selon laquelle le couple moteur est amené sur la roue arrière en parallèle du couple de pédalage : voir le lien internet https://www.electricbike.com/roys-ecortina/. Mais dans cette conception, il est toujours prévu un réducteur de vitesse entre le moteur et le pédalier, ce qui amène les mêmes inconvénients que ceux précédemment évoqués de poids de complexité mécanique accrue et également de perte de rendement. En outre, le moteur est implanté avec un décalage par rapport à une position centrale, ce qui n'est pas optimal.

On peut citer également les brevets anciens BE 661118A, et US 2331976 qui divulguent une conception de vélo à assistance par moteur thermique avec un couple moteur amenée sur la roue arrière en parallèle du couple de pédalage, avec les mêmes inconvénients encore plus accentués puisqu'un embrayage doit être intégré pour permettre au véhicule de démarrer sans faire caler le moteur thermique. En outre, de nos jours, il n'est plus raisonnable de concevoir des vélos à assistance par moteur thermique.

Le modèle d'utilité allemand DE202016104737U divulgue un vélo tout terrain à mécanisme de transmission de couple par moteur électrique en parallèle du mécanisme de transmission par pédalage, le moteur étant fixé sur un hauban arrière du vélo de sorte que l'entrainement qu'il génère passe directement par le disque de frein arrière.

La demande de brevet allemande DE102010031437 divulgue un vélo électrique selon le préambule de la revendication 1.

La demande de brevet japonaise JPH05278670 concerne un vélo urbain à mécanisme de transmission de couple par moteur électrique en parallèle du mécanisme de transmission par pédalage, le moteur étant fixé sur le moyeu arrière du vélo à proximité des pignons arrière.

La demande de brevet WO2018104633A1, citée dans le cadre de l'article 54(3) CBE, concerne un vélo tout terrain comprenant un mécanisme de transmission de couple par moteur électrique en parallèle du mécanisme de transmission par pédalage, dans lequel l'intégration d'un deuxième mécanisme de roue libre nécessite à la fois un support de disque spécifique, un moyeu arrière spécifique et l'utilisation impératives de clavettes prévues à cet effet.

Il existe donc un besoin d'améliorer les vélos à assistance électrique actuels, notamment pour des utilisateurs sportifs, pour lesquels l'aide ponctuelle du moteur électrique puisse permettre le franchissement instantané d'un obstacle ou d'une pente raide, même sans pédalage et depuis l'arrêt et ce sans que cela nuise à l'autonomie, c'est-à-dire la capacité du moteur à augmenter très significativement la performance ou à soulager les utilisateurs, très ponctuellement et donc de proposer une durée d'utilisation globale augmentée par rapport à une assistance en continu.

Le but de l'invention est de répondre au moins en partie à ce besoin.

### Exposé de l'invention

Pour ce faire, l'invention concerne, selon la revendication 1, un vélo électrique, comprenant:
- une roue arrière munie d'un axe de roue monté dans un moyeu ;
- une partie arrière de cadre à deux haubans écartés l'un de l'autre pour définir l'espace d'emplacement de la roue arrière ;
- un pédalier, destiné à être actionné par la force musculaire d'un utilisateur pour la transformer en un couple de pédalage, comprenant une manivelle de pédalier tournant autour d'un axe de pédalier;
- un moteur électrique comprenant un stator et un rotor pouvant tourner autour d'un axe de rotor, l'axe du rotor étant écarté tout en étant à proximité de l'axe du pédalier;
- un premier mécanisme de transmission de couple, le premier mécanisme comprenant une première roue d'entrée, pouvant être entraînée en rotation autour de l'axe du pédalier, un premier élément flexible de transmission, au moins une première roue de sortie, pouvant être entraînée par la première roue d'entrée par l'intermédiaire du premier élément flexible, un premier dispositif de roue libre, adapté pour transmettre le couple de pédalage à la roue arrière par l'intermédiaire de la première roue de sortie;
- un deuxième mécanisme de transmission de couple, distinct du premier mécanisme, le deuxième mécanisme comprenant une deuxième roue d'entrée, pouvant être entraînée en rotation autour de l'axe du rotor, un deuxième élément flexible de transmission, au moins une deuxième roue de sortie, pouvant être entraînée par la deuxième roue d'entrée par l'intermédiaire du deuxième élément flexible, un deuxième dispositif de roue libre, adapté pour transmettre le couple de pédalage à la roue arrière par l'intermédiaire de la deuxième roue de sortie;
- le moteur électrique, son système de stockage et d'alimentation électrique et son électronique de commande et le deuxième mécanisme de transmission de couple étant configurés pour transmettre directement le couple du moteur à la roue arrière sans couple de pédalage, y compris en partant de la position arrêtée du vélo.

Selon l'invention, l'axe du rotor est écarté tout en étant à proximité de l'axe du pédalier, le deuxième dispositif de roue libre est logé dans un ensemble support formant un boitier en deux pièces dont la pièce fixe est fixée d'une part à l'axe de roue arrière par l'intermédiaire d'une pièce de liaison fixée sur le moyeu et d'autre part à un disque de frein de la roue arrière tandis que la pièce mobile est fixée à la deuxième roue de sortie en étant solidaire de l'extérieur du deuxième dispositif de roue libre. Par « sans couple de pédalage», on entend ici et dans le cadre de l'invention, un mode d'entraînement/action sur la roue arrière d'un vélo électrique uniquement par le couple du moteur électrique sans qu'il y ait besoin pour l'utilisateur d'entraîner le pédalier avec sa force musculaire des jambes.

Selon un mode de réalisation avantageux, le deuxième mécanisme de transmission est agencé sur le côté extérieur des haubans, opposé à celui sur lequel est agencé le premier mécanisme de transmission. On a ainsi un côté du vélo exclusivement dédié à la chaîne de transmission usuelle par pédalage et l'autre côté exclusivement dédié à celle du moteur électrique. Outre un aspect esthétique certain, cela procure ainsi une simplicité dans la conception et également dans l'entretien des différents composants mécaniques.

On peut envisager d'avoir un mécanisme de réglage de l'élément flexible de transmission qui soit intégré au niveau du moteur électrique.

Avantageusement, les roues d'entrée et de sortie du deuxième mécanisme sont des roues dentées, l'élément flexible étant une chaîne à rouleaux. Comme déjà évoqué, outre l'avantage de ne pas avoir de réducteur, le mécanisme de transmission du couple moteur est très simple avec une seule roue dentée en sortie d'arbre moteur, une seule roue dentée de plus grand diamètre sur la roue arrière et une unique chaîne de transmission à rouleaux.

L'élément flexible peut aussi être une courroie de transmission, telle qu'une courroie crantée fonctionnant avec des pignons crantés.

De préférence, le rapport de réduction entre roue d'entrée et roue de sortie du deuxième mécanisme est compris entre 1/20 et 1/4, de préférence entre 1/12 et 1/6.

Un tel rapport est avantageux car on évite la mise en œuvre complexe de tout réducteur d'entraînement.

Lorsque le mécanisme de transmission est à roues dentées et chaîne à rouleaux, la roue dentée d'entrée peut comprendre entre 9 et 17 dents, typiquement un nombre de 13 dents, et alors la roue de sortie, sous la forme d'une couronne dentée peut comprendre entre entre 80 et 120 dents, typiquement un nombre de 100 / 110 dents.

Lorsque le mécanisme de transmission est à poulies crantées et courroie dentée, la poulie crantée en entrée peut comprendre un nombre de 14 à 26 crans, typiquement un nombre de 20 / 22 crans, tandis que la poulie crantée de sortie peut comprendre un nombre de 125 à 220 crans, typiquement un nombre de 160 / 176 crans.

Selon un mode de réalisation avantageux, on peut prévoir au moins un capteur de couple agencé dans le moyeu de la roue arrière. Un tel capteur sert à détecter directement ou indirectement les apports respectifs du couple de pédalage et du couple moteur pour aider ainsi l'utilisateur dans l'optimisation du fonctionnement du vélo électrique. Ainsi, les informations délivrées par ce capteur permettent à la fois :
- de garantir la loi de contrôle entre couple moteur et couple de pédalage, en particulier dans le respect d'une homologation;
- d'optimiser la consommation électrique par l'intensité délivrée au moteur et la charge de la batterie ;
- de faire les ajustements personnalisés selon des programmes de contrôle-commande du moteur.

Le moteur électrique peut être un moteur de type avec balais, qui a pour avantage notamment de délivrer un fort couple avec une vitesse de rotation modérée.

Le moteur peut être alimenté par une batterie de type lithium-polymère, qui a l'avantage notamment de pouvoir délivrer une forte décharge instantanée.

Ainsi, l'invention consiste essentiellement à combiner un vélo conçu classiquement avec sa transmission par pédalage, à une transmission supplémentaire par moteur électrique qui est en parallèle et complètement découplée de la transmission par pédalage.

Le découplage mécanique entre les deux mécanismes de transmission est assuré par deux roues libres, une dédiée au mécanisme de pédalage comme usuellement qui peut être intégrée dans une cassette de pignons, l'autre dédiée au mécanisme du moteur électrique, et qui peut être introduite soit à proximité de la sortie du moteur, ce qui ne fait pas partie de l'invention revendiquée, soit directement sur l'axe de roue arrière comme revendiqué à la revendication 1.

Les deux agencements possibles de la roue libre dédiée au mécanisme du moteur électrique et leur structure sont avantageux.

Implanter la roue libre à l'avant à proximité du moteur, permet de conserver un moyeu arrière classique.

Implanter la roue libre à l'arrière dans un bol permet un logement direct des deux mécanismes de roue libre autour du moyeu arrière, ce qui donne un ensemble compact.

Le découplage mécanique proposé par l'invention permet d'avoir un mécanisme de transmission du couple moteur simple et direct qui ne nécessite pas de réducteur de vitesse qui rajouterait d'ailleurs du poids au vélo comme dans les vélos à assistance électrique selon l'état de l'art.

Autrement dit, le couple du moteur électrique est en prise directe avec la roue arrière et aucun étage de multiplication n'est nécessaire.

Le système de stockage et d'alimentation électrique (batterie ou supercondensateur ou combinaison des deux notamment dans le cas de récupération d'énergie au freinage), le moteur électrique et tous les composants du mécanisme de transmission du moteur sont dimensionnés pour pouvoir passer des pics de couples très importants, en instantané. Typiquement, une puissance en pic de deux fois la valeur nominale ou plus, peut être délivrée à la roue arrière en un temps de l'ordre d'une seconde ou moins.

A titre de réalisation avantageuse, on peut envisager un moteur à balais, à faible vitesse de rotation alimenté par un ou plusieurs accumulateurs Li-polymère à forte décharge de courant.

Le fort couple d'un moteur à balais va permettre d'obtenir une accélération par une montée rapide en couple pour atteindre un seuil de vitesse à partir duquel le couple de pédalage va pouvoir être mis en œuvre.

L'avantage du bon fonctionnement du moteur à faible vitesse de rotation est que la transmission n'a pas besoin d'étage(s) de réduction supplémentaire(s), ce qui amène un gain de poids et une meilleure intégration de l'ensemble dans un vélo à structure classique et perturbe moins les équilibres géométriques du vélo, facteurs très importants pour des vélos sportifs. Un accumulateur Li-polymère a pour avantage de délivrer des intensités importantes sur des temps courts et d'alimenter de façon optimale le moteur pour délivrer ces forts couples moteurs.

Bien évidemment, d'autres combinaisons (couples) moteur électrique/batterie peuvent tout-à-fait convenir. On pourra ainsi prévoir un moteur électrique de type sans balais alimenté par une batterie à un ou plusieurs accumulateurs de type Li-ion.

Ainsi, grâce à l'invention, un utilisateur, en particulier un utilisateur sportif peut piloter l'apport de couples même très importants par le biais du moteur électrique et ce, indépendamment du couple de pédalage fourni. Ce dernier peut être alors utilisé de façon optimale (piloté ou ajusté) en fonction des besoins.

En pratique, l'utilisateur peut doser le couple moteur et accélérer, soit progressivement, soit très fortement puis couper le moteur pour être instantanément en adéquation avec la situation rencontrée.

Par rapport aux vélos à assistance électrique connus, l'invention apporte de nombreux avantages parmi lesquels :
- un meilleur temps de réponse ;
- un fonctionnement à souhait optimisé de la transmission du moteur ;
- un dimensionnement de la transmission pédalage qui peut rester celle d'un vélo classique sans moteur ;
- un changement aisé des vitesses de pédalage car du fait de l'indépendance de la transmission du moteur, celle-ci n'amène aucune résistance supplémentaire ;
- la possibilité de pouvoir pédaler avec le plus d'efficacité possible, sans aucun entrainement du moteur ;
- un choix des géométries du vélo, notamment les dimensions de construction du cadre, quasiment inchangées par rapport à celles d'un vélo classique;
- une autonomie maximale car le moteur peut être utilisé que ponctuellement en particulier pour franchir des obstacles ou pentes raides, l'utilisateur pouvant reprendre l'entrainement uniquement par le pédalage dès que possible ;
- une gamme de modes d'entraînement par le moteur très variée puisqu'il est possible de délivrer une accélération maximale dès le démarrage sans pédalage, de combiner à la fois un couple de pédalage et un couple moteur avec un dosage approprié entre les deux, ou d'utiliser un couple de pédalage seul;
- la possibilité de pouvoir recharger aisément la batterie d'alimentation du moteur et/ou un supercondensateur, sans que cela ne nuise au comportement du vélo ni au pédalage éventuel de l'utilisateur. En effet, de par le découplage entre le circuit du couple moteur et celui du couple de pédalage, la recharge du moteur peut se faire efficacement sans qu'il soit nécessaire de prévoir des moyens complexes pour découpler les deux circuits comme dans une conception en série et sans que cela n'ait un impact important sur le ressenti de l'utilisateur.
- la possibilité d'utiliser le couple frein du moteur, directement à la fois pour recharger la batterie d'alimentation du moteur et/ou un supercondensateur et pour ralentir le cycliste en descente notamment, tout en conservant le freinage à disque classique pour un freinage de forte intensité ou en urgence.

Pour le dosage entre couple de pédalage et couple moteur, on peut implanter des capteurs de fréquence, couple ou vitesse pour déterminer le couple de pédalage appliqué en temps réel. Ainsi, la connaissance de ce couple par l'unité de contrôle-commande peut permettre de solliciter le moteur et/ou la batterie et de délivrer le couple moteur adéquat.

De manière avantageuse, on peut aussi envisager d'agencer au moins un capteur de couple, de préférence autour de l'axe de roue arrière, l'utilisation d'un capteur de couple sur l'axe du pédalier étant une solution également possible et déjà connue.

Ce capteur permet ainsi à l'unité de contrôle-commande de pouvoir monitorer les apports respectifs du couple de pédalage et du couple du moteur et par-là d'aider l'utilisateur dans l'optimisation du fonctionnement. Ainsi, l'utilisateur peut être averti en temps réel dès que l'efficacité du moteur s'effondre, c'est-à-dire lorsque la vitesse de rotation du moteur baisse brutalement et le couple diminue, et qu'il faut alors l'alléger par le pédalage pour obtenir un entraînement de roue arrière satisfaisant.

L'utilisateur peut également être averti en temps réel de la consommation électrique et du ratio entre couple moteur et couple de pédalage : cela peut lui permettre de privilégier le pédalage afin de garder de l'autonomie de batterie ou encore de connaître le nombre d'accélérations par le couple du moteur qu'il peut encore réaliser.

L'invention convient donc particulièrement à la réalisation de vélos tous terrains (VTT) avec lesquels on souhaite ponctuellement passer des pentes très raides ou encore franchir des obstacles naturels, tout en recherchant une autonomie maximale qui peut être obtenue grâce d'une part à l'optimisation de l'utilisation du moteur électrique et d'autre part à la recharge possible au freinage ou en descente de la batterie d'alimentation du moteur électrique ou d'un supercondensateur.

Sur ce dernier point, on notera que le découplage des deux transmissions permet une récupération d'énergie directe avec moins de perte, donc efficace contrairement à ce qui a pu être conçu pour les vélos à assistance électrique selon l'état de l'art.

Egalement, l'invention permet d'envisager la réalisation de vélos destinés préférentiellement à des usages urbains, car la possibilité d'avoir le couple moteur actif dès le démarrage ou lors d'un besoin immédiat d'accélération importante et sans qu'il soit besoin de pédaler est très confortable pour un utilisateur urbain.

En effet, cela peut lui permettre de démarrer immédiatement et sans effort musculaire de pédalage, dès le passage d'un feu vert, pour un démarrage en côte lorsque l'utilisateur n'a pas adapté au préalable son rapport de vitesse pour le pédalage, c'est-à-dire que le pignon/plateau engagé(s) est trop élevé. Ceci est fréquemment le cas puisque les utilisateurs urbains souvent moins experts ou plus absorbés par leur trajet et le flux de véhicules, ne souhaitent pas se préoccuper du passage de vitesses, ainsi que le témoignent les systèmes automatiques ou de changement simplifiés proposés pour ces usagers....

En outre, en usage urbain, il est souvent nécessaire pour la sécurité d'un cycliste d'accélérer ponctuellement typiquement entre 10 et 25 km/h, pour effectuer un dépassement après le démarrage tout en restant bien stable sur sa trajectoire, par exemple avec les deux pieds immobiles sur les pédales pour le meilleur équilibre possible.

Selon la revendication 9, l'invention concerne également un procédé de fonctionnement d'un vélo électrique qui vient d'être décrit, comprenant les étapes suivantes :
a/ lorsque le vélo est à l'arrêt, application indépendante d'un couple de pédalage et/ou d'un couple du moteur électrique à la roue arrière ;
b/ lorsque le vélo a atteint une vitesse donnée, et lorsque l'étape a/ est réalisée uniquement par l'application d'un couple du moteur, application d'un couple de pédalage ou modification du couple moteur appliqué.

Selon la revendication 10, l'invention concerne encore un procédé de fonctionnement d'un vélo électrique décrit précédemment, comprenant les étapes suivantes, lorsque le vélo est dans une descente et/ou lorsqu'au moins l'un des systèmes de frein de la roue avant ou roue arrière est actionné:
i/ blocage du deuxième mécanisme de roue libre de sorte que la roue arrière en rotation entraîne par retour l'axe du rotor du moteur électrique ;
ii/ rechargement du système de stockage et d'alimentation électrique par le courant électrique délivré depuis le moteur.

L'étape i/ peut être mise en œuvre par effort de rétropédalage sur la manivelle de pédalier et/ou par actionnement manuel de la poignée de frein de roue arrière et/ou par actionnement d'un mécanisme d'embrayage adapté pour solidariser le disque de freinage de la roue arrière avec le deuxième mécanisme de roue libre. Ainsi, en inversant le sens de rotation de la chaine par blocage ou dérivation momentanée de la roue libre sur la transmission du moteur, on peut se servir de celui-ci comme un frein et avantageusement recharger le système de stockage et d'alimentation électrique du moteur.

Autrement dit, l'indépendance de la chaîne de transmission du moteur électrique permet, en bloquant/supprimant momentanément l'effet de la roue libre qui lui est dédiée, de solidariser la roue arrière à la roue de sortie et donc d'utiliser, lors des phases de freinage ou en descente, le moteur comme un frein qui réalise aussi avantageusement une récupération d'énergie en rechargeant la batterie d'alimentation et/ou un super condensateur.

On veille à ce que cette action de freinage par le moteur soit la plus intuitive pour l'utilisateur du vélo et que son intensité soit dosable pour qu'elle corresponde à ce qu'attend instantanément l'utilisateur. Elle doit aussi être compatible avec un freinage classique de forte intensité par le frein à disques pour s'arrêter très rapidement.

Comme explicité ci-avant, le blocage/la coupure momentanée de l'effet de la roue libre peut être réalisé de préférence, de manière alternative ou cumulative, par trois actionneurs différenciés, à savoir une poignée de frein, un rétropédalage, un mécanisme à embrayage entre disque de frein arrière et roue libre de la chaîne de transmission du moteur.

Avec l'un ou l'autre de ces trois actionneurs de freinage par le moteur, et avec l'utilisation d'une électronique de contrôle-commande adaptée, le moteur se trouve alors dans un fonctionnement de générateur électrique qui convertira le mouvement transmis depuis la roue arrière en énergie électrique.

Le freinage réalisé par le moteur dans cette conversion sera directement effectif sur le moyeu de la roue arrière et crée donc un véritable frein moteur pour l'utilisateur.

La récupération d'énergie mécanique en énergie électrique pour recharger la batterie par le biais du moteur qui devient un générateur, est aisée à obtenir et ce sans qu'on sollicite l'énergie et l'attention de l'utilisateur, du fait de l'indépendance du mécanisme de transmission du moteur par rapport à celui de pédalage.

Au contraire, dans un vélo à assistance électrique actuellement existant, si on souhaite réaliser une récupération d'énergie analogue, toute la remontée de l'énergie mécanique passerait par une chaine unique, ce qui aurait pour effet inconfortable d'entrainer les pédales lors du transfert de mouvement de la roue arrière vers le pignon d'entrée du moteur, ou alors nécessiterait un mécanisme supplémentaire de roue libre au niveau du pédalier.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une reproduction photographique d'un prototype de vélo électrique selon l'invention;
- la figure 2 est une reproduction photographique de l'arrière du vélo électrique selon la figure 1;
- la figure 3 est une vue schématique en perspective d'un cadre de vélo électrique muni d'une partie des composants du mécanisme de transmission du couple moteur électrique à la roue arrière conformément à l'invention;
- la figure 4 est une vue en coupe et en perspective montrant un montage du dispositif à roue libre de la transmission du couple moteur autour de l'axe de roue arrière d'un vélo électrique, selon un mode de réalisation de l'invention;
- la figure 5 est une vue en éclaté d'une partie des composants du montage de la transmission du couple moteur à l'arrière du vélo électrique, selon la figure 4 ;
- la figure 6 est une vue en perspective montrant un dispositif à roue libre de la transmission du couple moteur selon un deuxième mode de réalisation qui ne fait pas partie de l'invention revendiquée ;
- la figure 7 est une vue en éclaté du dispositif selon la figure 6 ;
- la figure 8 correspond à la figure 3 et montre schématiquement l'action du rétropédalage sur le mécanisme de transmission du moteur en vue de permettre à la fois un freinage par le couple moteur et une recharge électrique de la batterie alimentant ce dernier ;
- la figure 9 est une vue en éclaté d'une partie des composants du montage de la transmission du couple moteur à l'arrière du vélo électrique selon une première variante de l'invention, cette figure 9 montrant schématiquement les composants de blocage de la roue libre du mécanisme de transmission du moteur sous l'action d'un retro pédalage;
- les figures 9A et 9B sont des vues de coupe transversale schématiques illustrant les différents composants assemblés du montage de la figure 9; les figures 9A et 9B illustrant respectivement le mode actif et le mode inactif du frein moteur actionné par le rétropédalage ;
- la figure 10 est une vue en éclaté d'une partie des composants du montage de la transmission du couple moteur à l'arrière du vélo électrique selon une deuxième variante de l'invention, notamment par freinage sur le disque, cette figure 10 montrant schématiquement le blocage de la roue libre du mécanisme de transmission du moteur par un couplage mécanique ou un embrayage entre le disque et la partie mobile de la roue libre;
- les figures 10A et 10B sont des vues de coupe transversales schématiques illustrant les différents composants assemblés de la figure 10, les figures 10A et 10B illustrant respectivement le mode actif et le mode inactif du frein moteur réalisée par le freinage sur le disque ou par un embrayage entre le disque et la partie mobile de la roue libre ;
- la figure 11 illustre sous forme de courbes les différents cas d'un profil terrain et en regard les différentes contributions respectives de pédalage et de moteur électrique qu'un vélo électrique selon l'invention peut mettre en œuvre.

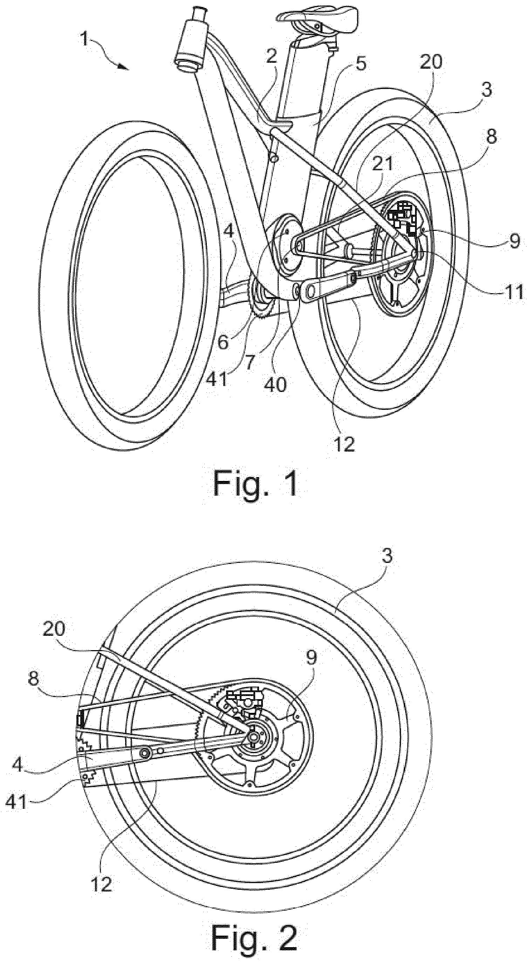

Par souci de clarté, les mêmes références désignant les mêmes éléments système selon l'invention sont utilisées pour toutes les figures 1 à 11.

Les figures 1 et 2 montrent un vélo électrique 1 selon l'invention.

Le vélo électrique 1 comprend un cadre 2 avec une roue arrière 3 agencée entre les deux haubans arrières 20, 21.

Le mécanisme de transmission du couple de pédalage est classique : il comporte depuis le pédalier 4 pouvant tourner autour de l'axe 40, un plateau 41, une chaîne à rouleaux 12, une cassette de pignons autour de l'axe 11 de roue arrière ainsi qu'un dispositif à roue libre permettant d'entrainer la roue arrière uniquement dans le sens horaire du pédalage.

Comme visible sur la figure 2, ce mécanisme est implanté comme usuellement c'est-à-dire du côté du hauban arrière à droite 21.

Le vélo 1 comprend également une batterie électrique 5, de type Li-polymère qui alimente, par l'intermédiaire d'une électronique de commande, un moteur électrique 6, de type à balais, la batterie et le moteur étant fixés dans la partie triangulaire du cadre 2.

Comme visible sur les figures 1 à 3, le moteur électrique 6 est destiné à entraîner directement la roue arrière 3 par l'intermédiaire d'un mécanisme de transmission qui est agencé du côté du hauban arrière 20 à gauche du cadre 2.

Plus précisément, l'arbre de sortie du moteur électrique 6 est muni d'une roue dentée 7 qui constitue la roue d'entrée qui entraîne directement, par l'intermédiaire d'une chaîne à rouleaux 8, la roue dentée de sortie 9, sous la forme d'une couronne, montée sur la roue arrière 3 autour de l'axe de roue arrière 11.

Le mécanisme de transmission du couple moteur est donc simple et direct puisqu'il est réalisé sans aucun réducteur de vitesse qui rajouterait d'ailleurs du poids au vélo, comme dans les vélos à assistance électrique selon l'état de l'art.

A titre d'exemple, dans le cas d'une transmission par chaine, la roue d'entrée 7 peut comporter entre 9 et 17 dents et la roue de sortie 9 entre 60 et 120 dents.

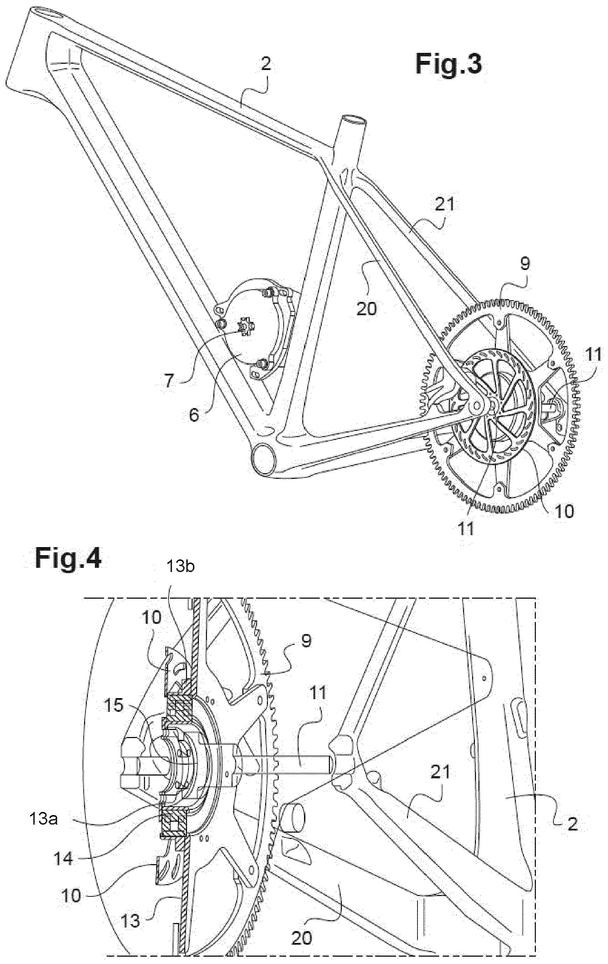

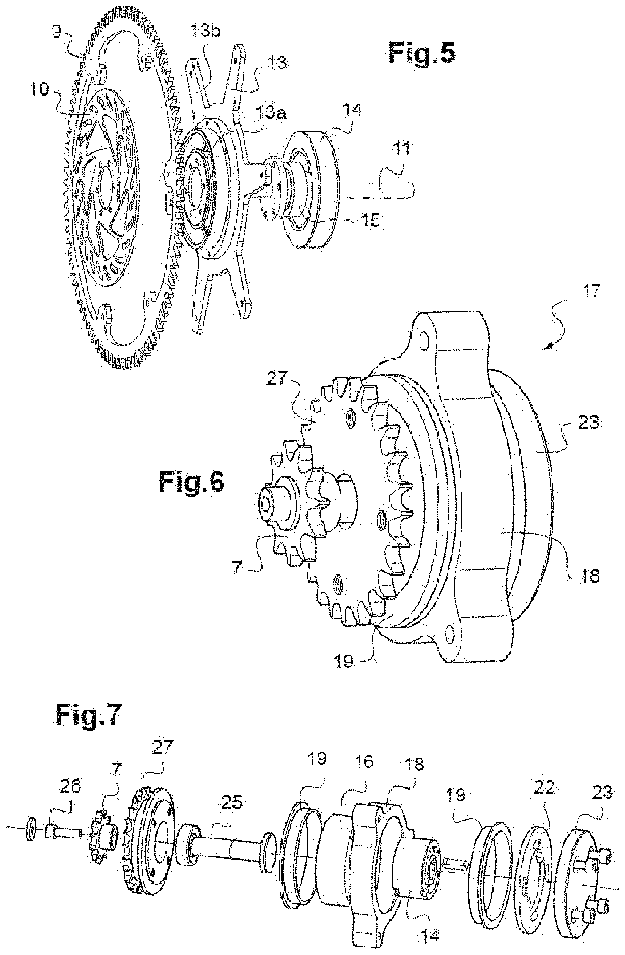

Le montage avantageux de la roue dentée de sortie 9 sur la roue arrière 3 est détaillé en figures 4 et 5.

Un ensemble support 13 comprend une piècel3a fixée d'une part à l'axe de roue arrière 11 par l'intermédiaire d'une pièce de liaison 15 et d'autre part au disque de frein 10, et une pièce 13b conformée en étoiles dont les branches sont fixées à la couronne dentée 9.

L'agencement relatif entre pièces 13a, 13b de l'ensemble support 13 forme un boitier dans lequel un dispositif à roue libre 14 est logé.

Ce dispositif de roue libre 14 permet d'entraîner la roue arrière 3 par le biais de la couronne dentée 9 uniquement lorsqu'elle est entraînée dans un sens par le moteur électrique.

L'ensemble support 13 et la couronne 9 sont donc solidaires de l'extérieur de la roue libre 14 par l'intermédiaire de la pièce 13b en étoile.

Une pièce de liaison 15 est fixée sur le moyeu et est rigidement solidaire de la bague interne de la roue libre 14 et du disque de frein 10 par l'intermédiaire de la pièce 13a.

Cet agencement est avantageux car il permet une intégration optimale de la roue libre 14 directement dans le moyeu de la roue arrière.

Ainsi, selon l'invention, le mécanisme de transmission du couple moteur électrique et celui du couple de pédalage sont totalement indépendants et permettent chacun d'amener de la puissance à la roue arrière 3.

Autrement dit, un utilisateur peut apporter un couple du moteur électrique, qui peut être très conséquent, directement sur la roue arrière, indépendamment de l'effort de pédalage appliqué.

Ainsi, l'utilisateur peut doser précisément le couple moteur et accélérer progressivement ou couper le moteur électrique, ce qui lui permet d'adapter parfaitement la conduite du vélo avec le parcours rencontré.

L'indépendance des mécanismes de transmission permet à l'utilisateur de pédaler avec le plus d'efficacité possible, car il ne subit pas le couple rémanent du moteur qu'il n'a pas à entraîner avec sa force musculaire des jambes.

Par conséquent, le vélo électrique qui vient d'être décrit permet d'apporter une autonomie maximale à un utilisateur qui peut se servir du moteur uniquement lorsqu'il le souhaite et qui peut pédaler dès que possible en coupant instantanément le moteur.

En pratique, les inventeurs ont fait l'analyse de courbes de moteurs à courant continu qui pourraient convenir dans le cadre de l'invention et ont mis en relation les caractéristiques de ces moteurs avec les situations qui leur semblent critiques lors de l'utilisation du vélo, à savoir pendant une accélération au démarrage et en cas de franchissement de pentes raides et/ou obstacles.

Leurs conclusions pour le choix du moteur et de la batterie sont les suivantes.

L'intensité et le couple délivré par le moteur sont proportionnels selon une loi linéaire.

La puissance augmente aussi avec l'intensité puis va plafonner. En plus de la puissance nominale, il est intéressant de pouvoir bénéficier pour les situations critiques, sur des temps assez courts d'une puissance supérieure à la puissance nominale.

Ainsi, dans le cas d'un démarrage, la puissance en pic est de préférence déterminée pour avoir une valeur deux fois plus importante que la puissance nominale pendant un certain temps, de l'ordre de 1s, grâce à un passage de courant à forte intensité. Le couple du moteur doit être élevé sur une plage de vitesse la plus longue possible à partir de la vitesse (nulle) de démarrage.

Pour franchir une pente raide ou un obstacle, le couple du moteur doit pouvoir vaincre un couple résistant fort à la roue arrière sans qu'il ne s'effondre pour autant. Pour maintenir une vitesse de rotation suffisante, un appel de courant va permettre d'augmenter temporairement la puissance en pic pour vaincre le couple résistant.

A puissance égale, le couple du moteur va diminuer lorsque la vitesse de rotation va augmenter, ce qui correspond parfaitement à une utilisation normale c'est-à-dire en dehors des situations critiques.

Lors d'essais que les inventeurs ont pu réaliser sur des prototypes de vélo électrique selon l'invention, ils ont pu constater que lors de passages sur des pentes très raides et courtes, un couple de pédalage même peu important permet un allégement du couple frein sur le moteur, donc une relance quasi instantanée du moteur qui retrouve à la fois une vitesse de rotation plus élevée, un couple plus élevé et un rendement bien meilleur.

A partir de l'observation d'une courbe de rendement, on constate que ce dernier est très mauvais pour des faibles valeurs d'intensité/de vitesse de rotation du moteur. La durée pendant laquelle le moteur tourne à faible vitesse doit être minimisée, donc en faisant monter le plus rapidement possible l'intensité d'alimentation du moteur.

En bref, le moteur électrique 6 est déterminé pour avoir un couple nominal élevé avec des pics de couple et puissance très élevés et instantanés, sur des temps très courts. Il peut s'agir de moteurs à balais ou des moteurs appelés usuellement moteurs couple.

La batterie 5 est déterminée pour présenter une forte décharge instantanée. Il peut s'agir d'une batterie Li-polymère ou même d'une batterie Li-ion à très forte décharge instantanée. On peut également envisager d'implanter en lieu et place d'une batterie, un supercondensateur.

Le fonctionnement d'un vélo électrique 1 selon l'invention permet, contrairement aux vélos à assistance électrique selon l'état de l'art, un pilotage instantané complètement hybride et ce dès l'arrêt du vélo.

Ainsi, les modes de fonctionnement du vélo électrique peuvent être les suivants :
- un mode classique de pédalage sans aucune action du moteur électrique et de son mécanisme de transmission sur la roue arrière ;
- un mode d'action unique du moteur électrique sur la roue arrière, sans aucune action de pédalage. Ce mode peut être actionné au démarrage, ou en cas d'obstacle et/ou de pente très raide impossible à franchir par la seule force de pédalage ;
- un mode combiné d'actions de pédalage et du moteur électrique dans lequel le couple du moteur électrique vient compléter celui du pédalage ou vice-et-versa.

Un autre mode de fonctionnement rendu possible par le mécanisme de transmission est, lors des phases de freinage ou en descente, l'utilisation du moteur comme un frein par blocage du mécanisme de roue libre dédié, ce frein moteur réalise aussi avantageusement une récupération d'énergie en rechargeant la batterie d'alimentation du moteur et/ou un super condensateur.

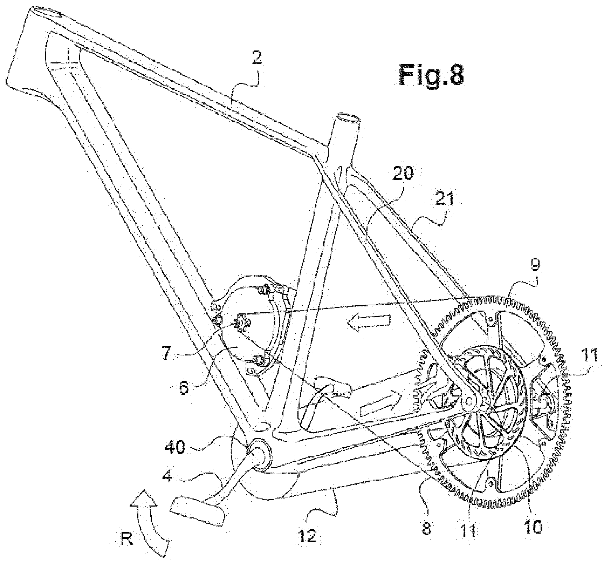

La figure 8 montre de manière schématique l'action d'un rétropédalage selon le sens R sur le pédalier 4 du vélo électrique afin de mettre en œuvre le frein moteur et la recharge de sa batterie d'alimentation.

De préférence, le moteur est à courant continu qui a pour avantage de se transformer très facilement en générateur et ainsi peut recharger une batterie.

A partir d'un angle minimum de retro pédalage, l'effort de rétropédalage vient mettre en rotation la chaîne à rouleaux 12 de pédalage qui transmet autour du moyeu 11 une rotation arrière de l'ensemble pignon/cassette de pédalage 53. Contrairement aux freins classiques, le freinage ne sera pas directement implanté dans le moyeu.

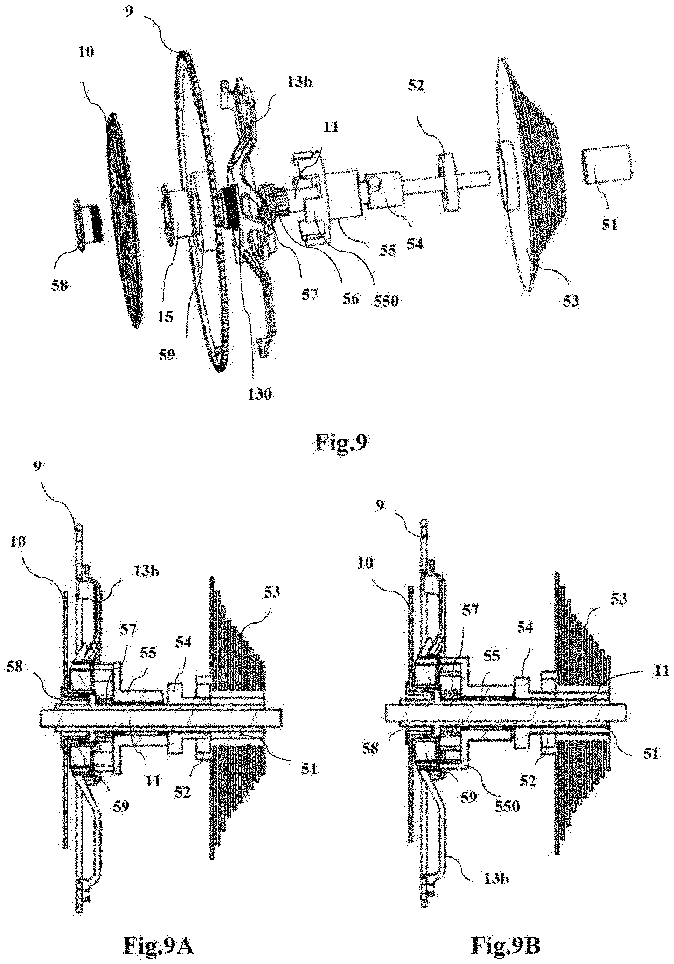

En figures 9, 9A et 9B est illustrée une variante de mise en œuvre du frein moteur par rétropédalage. Une deuxième roue libre 52 est agencée à côté de et liée à la première roue libre 51 usuelle du pédalage par leurs parties extérieures. Ces deux roues libres 51, 52 sont liées sur leur face extérieure au pignon de pédalage 53.

La deuxième roue libre 52 est cependant montée en sens inverse par rapport à la première roue libre 51.

En rétropédalage, la cassette de pignons 53 tourne dans le sens inverse des aiguilles du montre. La roue libre 51 n'entraine pas le moyeu 11 dans ce sens de rotation. En revanche la roue libre 52 permet d'entrainer en rotation dans le sens inverse des aiguilles d'une montre, une came 54 qui est en liaison pivot avec le moyeu 11.

La came 54 vient alors en contact avec un dispositif à crabots 55 qui translate sur les cannelures 56 qui sont en liaison encastrement avec le moyeu.

Le ressort hélicoïdal 57 se comprime, et le dispositif à crabots 55 s'indexe alors sur la pièce en étoile 13b. Plus précisément, les crabots 550 pénètrent individuellement dans une ouverture traversante 130 de la pièce en étoile 13b.

La couronne dentée 9 est alors liée au moyeu 11 et suit donc le même mouvement de rotation que ce dernier (figure 9A).

Par l'intermédiaire de la chaîne de transmission 8, la couronne dentée 9 entraine alors le pignon d'entrée 7 dans le sens des aiguilles d'une montre. Le moteur génère alors du courant pour recharger la batterie.

Si l'utilisateur se remet à pédaler dans le sens des aiguilles d'une montre, l'action du ressort hélicoïdal 57 repousse le dispositif à crabots 55 qui est alors libéré de la pièce en étoile 13b. La couronne 9 n'est donc plus solidaire du moyeu 11, plus aucun couple n'est transmis au moteur électrique et donc la génération de courant par ce dernier est arrêtée.

On peut aussi réaliser le frein moteur par l'actionnement manuel de la poignée du frein à disques arrière. qui va agir sur un électroaimant.

Ainsi, comme pour le mode d'actionnement par rétropédalage, l'actionnement de la poignée de frein arrière initie un couplage entre moyeu et couronne dentée du côté transmission moteur, mais cette fois ci sans aucune intervention sur le mécanisme de transmission par pédalage qui reste libre et disponible pour une reprise immédiate du pédalage.

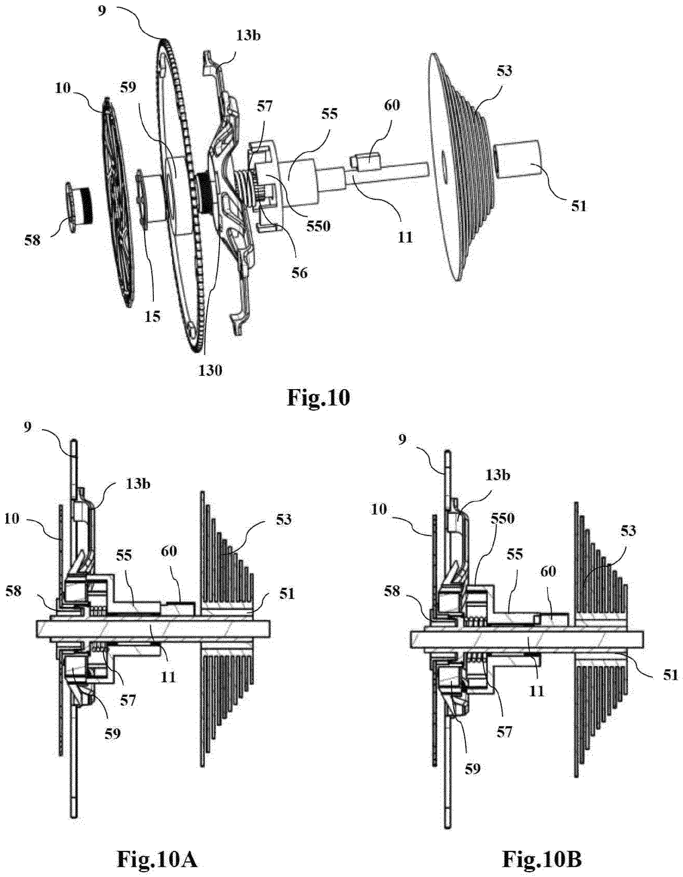

Pour ce faire, comme illustré schématiquement en figures 10 à 10B, on prévoit de supprimer la roue libre 52, et de la remplacer dans son fonctionnement par le roulement arrière 59.

Ainsi, lorsque l'utilisateur appuie sur la gâchette d'actionnement du moteur, un courant électrique est envoyé à un électroaimant 60 qui met en mouvement de translation le dispositif à crabots 55 ici en liaison glissière avec les cannelures 56.

Le ressort hélicoïdal 57 se comprime, ce qui solidarise le dispositif à crabots 55 avec la pièce en étoile 13b, grâce aux crabots 550 qui s'insèrent chacun dans une ouverture traversante 130 de la pièce en étoile, (figure 10A). Le moyeu 11 est alors solidaire de la couronne dentée 9. Le moteur entraine la couronne dentée 9 et donc le moyeu 11 et la roue arrière.

Si l'utilisateur relâche la gâchette d'accélération, il n'y a plus de courant envoyé à l'électroaimant 60. Le ressort hélicoïdal 57 repousse donc le dispositif à crabots (figure 10B). La couronne 9 n'est plus solidaire du moyeu 11. La roue arrière est libre et n'est plus entraîné par le moteur.

Lorsque l'utilisateur appuie sur le levier de frein, un courant est envoyé à l'électroaimant 60, ce qui rend à nouveau le moyeu 11 solidaire de la couronne 9.

La roue arrière entraine donc le moteur qui génère alors du courant pour recharger la batterie. Et l'utilisateur bénéficie d'un frein moteur. S'il continue d'appuyer plus fort sur le levier de frein, le disque est alors pincé par l'étrier de frein. En plus du freinage moteur il y a un freinage mécanique.

Dès que l'utilisateur relâche le levier de frein, la roue arrière est libre et n'est plus entraînée par le moteur.

Dans les montages des figures 8 à 10B, un unique écrou de blocage 58 vissé sur l'axe du moyeu 11 vient bloquer l'ensemble des composants sur ce dernier.

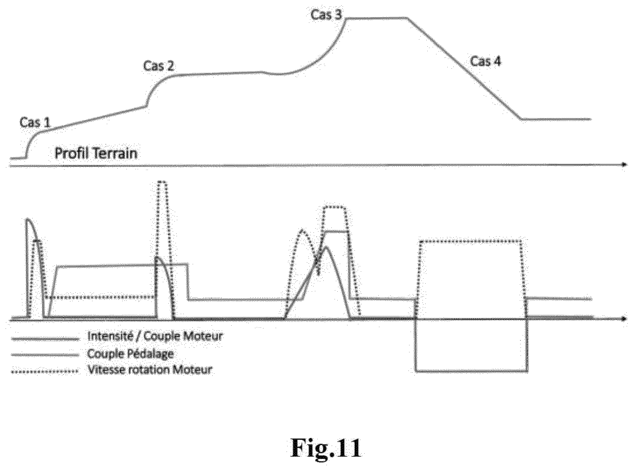

On a illustré en figure 11, un exemple de différents cas de profil de terrain et en regard les contributions respectives de pédalage en termes de couple et la motorisation en termes d'intensité/couple et de vitesse de rotation du moteur électrique dans un vélo selon l'invention.

Dans le cas 1, le vélo est à l'arrêt et l'utilisateur met le vélo en mouvement avec le seul moteur qui part d'une vitesse de rotation nulle.

Dans le cas 2, l'utilisateur est en pédalage et le moteur va apporter ponctuellement de la puissance supplémentaire, par exemple pour franchir un obstacle ou pour accélérer et s'extraire d'un flot de circulation. Dans cette situation, la transmission du moteur va d'abord être effectuée pour rattraper la vitesse de rotation de pédalage, afin d'être en prise avec la roue arrière, puis elle va apporter le couple et la puissance nécessaire à la roue arrière.

Ces cas 1 et 2 du pilotage du moteur électrique sont donc prévus lorsque l'utilisateur souhaite apporter en quelque sorte très rapidement une puissance importante au vélo.

Le cas 3 correspond à une situation dans laquelle le couple de pédalage vient ponctuellement compléter le couple moteur.

Par exemple, cela peut se produire, dans une situation de montée très raide, dans laquelle le vélo peut avancer uniquement à tout le moins principalement par le moteur électrique. Si la puissance n'est pas suffisamment importante, la vitesse du moteur va diminuer, ce qui peut aller jusqu'à l'arrêt du moteur et du vélo.

Grâce à la transmission de pédalage indépendante conforme à l'invention, l'utilisateur va pouvoir pédaler lorsqu'il sent le moteur peiner. Au préalable, il peut sélectionner facilement le bon rapport de démultiplication côté chaine de pédalage puisque cette chaine n'est pas encore en prise avec la roue arrière.

Ensuite, il apporte instantanément un couple de pédalage à la roue arrière et diminue ainsi le couple résistant appliqué au moteur.

Le moteur va pouvoir ainsi être relancé et donc reprendre de la puissance, puisqu'il est directement sur son bon rapport de démultiplication.

Ce cas 3 montre bien que les deux mécanismes de transmission indépendants conformément à l'invention complètent parfaitement les rapports de réduction adaptés ainsi que les plages de fonctionnement différentes des deux moyens de propulsion indépendants plage restreinte pour le cycliste, plage élargie pour le moteur dans un rapport d'au moins 1 à 10 ou 20, typiquement de 50 trs/min pour le cycliste, et 1000 trs/min pour le moteur.

Le cas 4 correspond à une situation en descente du vélo ou pour s'arrêter.

Ici, le vélo est entrainé par pédalage (à plat) ou en descente par gravité.

L'actionnement du frein arrière comme décrit ci-avant va entraîner le moteur, qui va alors transformer l'énergie mécanique de la roue arrière en énergie électrique et dans le même temps freiner le vélo.

D'autres avantages et améliorations peuvent être prévus sans pour autant sortir du cadre de l'invention tel que défini par les revendications.

Si dans les modes de réalisation illustrés, le mécanisme de transmission du couple moteur est du côté des haubans arrière à l'opposé de celui où est le mécanisme de transmission du pédalage, on peut envisager de les avoir tous les deux du même côté.

En lieu et place d'une transmission par roues dentées et chaîne à rouleaux pour la transmission du couple du moteur électrique, on peut envisager une transmission par poulies et courroie.

En outre, dans un mode de réalisation non revendiqué, au lieu d'implanter le dispositif de roue libre 14 dans le moyeu autour de l'axe de roue arrière 11, on peut l'agencer à proximité du moteur électrique.

Un exemple de réalisation qui ne fait pas partie de l'invention revendiquée mais représente un élément de l'état de la technique, est montré aux figures 6 et 7.

Dans cet exemple, la roue libre 14 est intégrée dans un boitier 16 lui-même logé dans un support 17. Plus exactement, la roue libre 14 est logée dans le boitier 16 au niveau d'une bride de fixation 18 au cadre de vélo.

La roue libre 14 est maintenue dans un espace entre deux coussinets 19 fermé par une flasque 22 et le couvercle 23 du boitier.

La roue libre 14 est montée autour d'un axe de rotation 25 sur lequel est fixé un pignon à dents 7 par une vis centrale 26.

Le pignon 7 constitue la roue d'entrée du mécanisme de transmission du couple moteur vers la roue arrière.

Une roue dentée 27, qui est d'un grand diamètre, est quant à elle montée autour de l'axe de rotation 25 en étant fixée directement au couvercle 23 de boitier. Cette roue dentée peut être entraînée par l'arbre de sortie du moteur par une chaîne à rouleaux.

L'expression « comportant un » ou « comprenant un » doit être comprise comme étant synonyme de « comportant au moins un », sauf si le contraire est spécifié.

## Revendications

1. Vélo électrique (1), comprenant :
- une roue arrière (3) munie d'un axe de roue (11) monté dans un moyeu ;
- une partie arrière de cadre (2) à deux haubans (20, 21) écartés l'un de l'autre pour définir l'espace d'emplacement de la roue arrière ;
- un pédalier (4), destiné à être actionné par la force musculaire d'un utilisateur pour la transformer en un couple de pédalage, comprenant une manivelle de pédalier tournant autour d'un axe de pédalier (40) ;
- un moteur électrique (6) comprenant un stator et un rotor pouvant tourner autour d'un axe de rotor ;
- un premier mécanisme de transmission de couple, le premier mécanisme comprenant une première roue d'entrée (41), pouvant être entraînée en rotation autour de l'axe du pédalier, un premier élément flexible de transmission (12), au moins une première roue de sortie (53), pouvant être entraînée par la première roue d'entrée par l'intermédiaire du premier élément flexible, un premier dispositif de roue libre (51), adapté pour transmettre le couple de pédalage à la roue arrière par l'intermédiaire de la première roue de sortie ;
- un deuxième mécanisme de transmission de couple, distinct du premier mécanisme, le deuxième mécanisme comprenant une deuxième roue d'entrée (7), pouvant être entraînée en rotation autour de l'axe du rotor, un deuxième élément flexible de transmission (8), au moins une deuxième roue de sortie (9), pouvant être entraînée par la deuxième roue d'entrée par l'intermédiaire du deuxième élément flexible, un deuxième dispositif de roue libre (14), adapté pour transmettre le couple du moteur à la roue arrière par l'intermédiaire de la deuxième roue de sortie ;
- le moteur électrique, son système de stockage et d'alimentation électrique et son électronique de commande et le deuxième mécanisme de transmission de couple étant configurés pour transmettre directement le couple du moteur à la roue arrière sans couple de pédalage, y compris en partant de la position arrêtée du vélo,
**caractérisé en ce que** l'axe du rotor est écarté tout en étant à proximité de l'axe du pédalier et **en ce que** le deuxième dispositif de roue libre (14) est logé dans un ensemble support formant un boitier (13) en deux pièces dont la pièce fixe (13a) est fixée d'une part à l'axe de roue arrière (11) par l'intermédiaire d'une pièce de liaison (15) fixée sur le moyeu et d'autre part à un disque de frein (10) de la roue arrière tandis que la pièce mobile (13b) est fixée à la deuxième roue de sortie (9) en étant solidaire de l'extérieur du deuxième dispositif de roue libre (14).

2. Vélo électrique selon la revendication 1, le deuxième mécanisme de transmission étant agencé sur le côté extérieur des haubans, opposé à celui sur lequel est agencé le premier mécanisme de transmission.

3. Vélo électrique selon l'une des revendications précédentes, les roues d'entrée et de sortie du deuxième mécanisme étant des roues dentées ou des pignons crantés, l'élément flexible étant une chaîne à rouleaux ou une courroie crantée.

4. Vélo électrique selon l'une des revendications précédentes, le rapport de réduction entre roue d'entrée et roue de sortie du deuxième mécanisme étant compris entre 1/20 et 1/4, de préférence entre 1/12 et 1/6.

5. Vélo électrique selon l'une des revendications précédentes, comprenant au moins un capteur de couple agencé dans le moyeu de la roue arrière.

6. Vélo électrique selon l'une des revendications précédentes, le moteur électrique étant un moteur de type avec balais.

7. Vélo électrique selon l'une des revendications précédentes, le moteur étant alimenté par une batterie (5) de type lithium-polymère ou Li-ion.

8. Vélo électrique selon l'une des revendications précédentes, comprenant en outre un troisième dispositif de roue libre (52), agencé à côté du et lié au premier dispositif de roue libre (51) par leurs parties extérieures, lesdits premier et troisième dispositifs de roue libre (51, 52) étant liés sur leur face extérieure à la première roue de sortie (53), le troisième dispositif de roue libre (52) étant monté en sens inverse du premier dispositif de roue libre (51).

9. Procédé de fonctionnement d'un vélo électrique selon l'une des revendications 1 à 8, comprenant les étapes suivantes :
a/ lorsque le vélo est à l'arrêt, application indépendante d'un couple de pédalage et/ou d'un couple du moteur électrique à la roue arrière ;
b/ lorsque le vélo a atteint une vitesse donnée, et lorsque l'étape a/ est réalisée uniquement par l'application d'un couple du moteur, application d'un couple de pédalage ou modification du couple du moteur appliqué.

10. Procédé de fonctionnement d'un vélo électrique selon l'une des revendications 1 à 8, comprenant les étapes suivantes, lorsque le vélo est dans une descente et/ou lorsqu'au moins l'un des systèmes de frein de la roue avant ou roue arrière est actionné:
i/ blocage du deuxième dispositif de roue libre de sorte que la roue arrière en rotation entraîne par retour l'axe du rotor du moteur électrique ;
ii/ rechargement du système de stockage et d'alimentation électrique par le courant électrique délivré depuis le moteur.

11. Procédé de fonctionnement selon la revendication 10, l'étape i/ étant mise en œuvre par effort de rétropédalage sur la manivelle de pédalier et/ou par actionnement manuel de la poignée de frein de roue arrière et/ou par actionnement d'un mécanisme d'embrayage adapté pour solidariser le disque de frein de la roue arrière avec le deuxième dispositif de roue libre.

## Patentansprüche

1. Elektrisches Fahrrad (1), das Folgendes beinhaltet:
- ein Hinterrad (3), das über eine Radachse (11) verfügt, die in einer Nabe montiert ist;
- einen hinteren Rahmenabschnitt (2) mit zwei Streben (20, 21), die voneinander beabstandet sind, um den Einbauplatz für das Hinterrad zu definieren;
- ein Tretlager (4), das dazu bestimmt ist, durch die Muskelkraft eines Benutzers betätigt zu werden, um diese in ein Tretdrehmoment umzuwandeln, beinhaltend eine Tretlagerkurbel, die sich um eine Tretlagerachse (40) dreht;
- einen Elektromotor (6), der einen Stator und einen Rotor, der sich um eine Rotorachse drehen kann, beinhaltet;
- einen ersten Drehmomentübertragungsmechanismus, wobei der erste Mechanismus Folgendes beinhaltet: ein erstes Eingangsrad (41), das zur Drehung um die Achse des Tretlagers angetrieben werden kann, ein erstes flexibles Übertragungselement (12), mindestens ein erstes Abgangsrad (53), das von dem ersten Eingangsrad über das erste flexible Element angetrieben werden kann, eine erste Freilaufvorrichtung (51), die dazu angepasst ist, das Tretdrehmoment über das erste Abgangsrad auf das Hinterrad zu übertragen;
- einen zweiten Drehmomentübertragungsmechanismus, der sich von dem ersten Mechanismus unterscheidet, wobei der zweite Mechanismus Folgendes beinhaltet: ein zweites Eingangsrad (7), das zur Drehung um die Achse des Rotors angetrieben werden kann, ein zweites flexibles Übertragungselement (8), mindestens ein zweites Abgangsrad (9), das von dem zweiten Eingangsrad über das zweite flexible Element angetrieben werden kann, eine zweite Freilaufvorrichtung (14), die dazu angepasst ist, das Drehmoment des Motors über das zweite Abgangsrad auf das Hinterrad zu übertragen;
- wobei der Elektromotor, sein Energiespeicher- und -versorgungssystem und seine Steuerelektronik und der zweite Drehmomentübertragungsmechanismus dazu konfiguriert sind, das Drehmoment des Motors ohne Tretdrehmoment direkt auf das Hinterrad zu übertragen, auch aus einem Stillstand des Fahrrads heraus,
**dadurch gekennzeichnet, dass** die Achse des Rotors von der Achse des Tretlagers beabstandet ist, sich aber gleichzeitig in ihrer Nähe befindet, und dass die zweite Freilaufvorrichtung (14) in einer Lageranordnung untergebracht ist, die ein zweiteiliges Gehäuse (13) bildet, dessen fester Teil (13a) einerseits mit Hilfe eines Verbindungsteils (15), der an der Nabe befestigt ist, an der Achse des Hinterrads (11) und andererseits an einer Bremsscheibe (10) des Hinterrads befestigt ist, während der bewegliche Teil (13b) an dem zweiten Abgangsrad (9) befestigt ist und dabei gleichzeitig mit der Außenseite der zweiten Freilaufvorrichtung (14) fest verbunden ist.

2. Elektrisches Fahrrad nach Anspruch 1, wobei der zweite Übertragungsmechanismus auf der Außenseite der Streben angeordnet ist, gegenüber der Seite, auf der der erste Übertragungsmechanismus angeordnet ist.

3. Elektrisches Fahrrad nach einem der vorhergehenden Ansprüche, wobei das Eingangs- und das Abgangsrad des zweiten Mechanismus Zahnräder oder Zahnritzel sind, wobei das flexible Element eine Rollenkette oder ein Zahnriemen ist.

4. Elektrisches Fahrrad nach einem der vorhergehenden Ansprüche, wobei das Untersetzungsverhältnis zwischen Eingangsrad und Abgangsrad des zweiten Mechanismus zwischen 1/20 und 1/4 und vorzugsweise zwischen 1/12 und 1/6 liegt.

5. Elektrisches Fahrrad nach einem der vorhergehenden Ansprüche, das mindestens einen Drehmomentsensor beinhaltet, der in der Nabe des Hinterrades angeordnet ist.

6. Elektrisches Fahrrad nach einem der vorhergehenden Ansprüche, wobei der Elektromotor ein Motor vom Typ mit Bürsten ist.

7. Elektrisches Fahrrad nach einem der vorhergehenden Ansprüche, wobei der Motor von einem Akku (5) vom Typ Lithium-Polymer oder Li-Ionen versorgt wird.

8. Elektrisches Fahrrad nach einem der vorhergehenden Ansprüche, das ferner eine dritte Freilaufvorrichtung (52) beinhaltet, die neben der ersten Freilaufvorrichtung (51) angeordnet und durch die äußeren Teile mit ihr verbunden ist, wobei die erste und die dritte Freilaufvorrichtung (51, 52) an ihrer Außenfläche mit dem ersten Abgangsrad (53) verbunden sind, wobei die dritte Freilaufvorrichtung (52) gegenläufig zu der ersten Freilaufvorrichtung (51) montiert ist.

9. Verfahren für den Betrieb eines elektrischen Fahrrads nach einem der Ansprüche 1 bis 8, das die folgenden Schritte beinhaltet:
a/ wenn das Fahrrad stillsteht, unabhängiges Anwenden eines Tretdrehmoments und/oder eines Drehmoments des Elektromotors auf das Hinterrad;
b/ wenn das Fahrrad eine gegebene Geschwindigkeit erreicht hat und wenn Schritt a/ ausschließlich durch das Anwenden eines Drehmoments des Motors durchgeführt wird, Anwenden eines Tretdrehmoments oder Ändern des angewendeten Drehmoments des Motors.

10. Verfahren für den Betrieb eines elektrischen Fahrrads nach einem der Ansprüche 1 bis 8, das die folgenden Schritte beinhaltet, wenn das Fahrrad abwärts fährt und/oder wenn mindestens eines von dem Bremssystem des Vorderrads oder des Hinterrads betätigt wird:
i/ Blockieren der zweiten Freilaufvorrichtung, sodass das drehende Hinterrad im Gegenzug die Achse des Rotors des Elektromotors antreibt;
ii/ Wiederaufladen des Energiespeicher- und -versorgungssystems durch den elektrischen Strom, der vom Motor bereitgestellt wird.

11. Betriebsverfahren nach Anspruch 10, wobei Schritt i/ durch eine Rücktrittskraft auf die Tretlagerkurbel und/oder durch eine manuelle Betätigung des Bremshebels für das Hinterrad und/oder durch eine Betätigung eines Kupplungsmechanismus, der dazu angepasst ist, die Bremsscheibe des Hinterrades fest mit der zweiten Freilaufvorrichtung zu verbinden, umgesetzt wird.

## Claims

1. Electric bicycle (1) comprising:
- a rear wheel (3) provided with a wheel axle (11) mounted in a hub;
- a rear portion of the frame (2) having two seat stays (20, 21) that are spaced apart from one another so as to define the space for receiving the rear wheel;
- a crankset (4) that is designed to be actuated by the muscular force of a user in order to transform that force into a pedal torque, this crankset comprising a pedal crank that rotates about a crank spindle (40);
- an electric motor (6) comprising a stator and a rotor that can rotate about a rotor spindle;
- a first torque transmission mechanism, the first mechanism comprising a first input wheel (41) that can be driven in rotation about the crank spindle, a first flexible transmission element (12), at least one first output wheel (53) that can be driven by the first input wheel by the first flexible element, a freewheel device (51) that is designed to transmit the pedal torque to the rear wheel via the first output wheel;
- a second torque transmission mechanism which is distinct from the first mechanism, the second mechanism comprising a second input wheel (7) that can be driven in rotation about the spindle of the rotor, a second flexible transmission element (8), at least one second output wheel (9) that can be driven by the second input wheel via the second flexible element, a second freewheel device (14) that is designed to transmit the motor torque to the rear wheel via the second output wheel;
- the electric motor, its electrical power storage system and its control electronics and the second torque transmission mechanism being configured to directly transmit the torque from the motor to the rear wheel with no pedal torque, even when starting the bicycle from rest;
**characterized in that** the spindle of the rotor is spaced apart from while still being close to the pedal crank, and **in that** the second freewheel device (14) is housed in a support assembly forming a two-part housing (13) of which the fixed part (13a) is attached on one hand to the rear wheel axle (11) by means of a connecting part (15) attached to the hub, and on the other hand to a brake disk (10) of the rear wheel, while the movable part (13b) is attached to the second output wheel (9), being secured to the outside of the second freewheel device (14).

2. Electric bicycle according to Claim 1, the second transmission mechanism being arranged on the outer side of the seat stays, opposite that side on which the first transmission mechanism is arranged.

3. Electric bicycle according to either of the preceding claims, the input and output wheels of the second mechanism being sprockets or notched pinions, the flexible element being a roller chain or a notched belt.

4. Electric bicycle according to one of the preceding claims, the reduction ratio between the input wheel and the output wheel of the second mechanism being between 1/20 and 1/4, preferably between 1/12 and 1/6.

5. Electric bicycle according to one of the preceding claims, comprising at least one torque sensor arranged in the hub of the rear wheel.

6. Electric bicycle according to one of the preceding claims, the electric motor being a brush type motor.

7. Electric bicycle according to one of the preceding claims, the motor being supplied by a battery (5) of the lithium-polymer or Li-ion type.

8. Electric bicycle according to one of the preceding claims, further comprising a freewheel device (52) arranged next to and connected to the first freewheel device (51) by their outer parts, said first and third freewheel devices (51, 52) being connected at their outer face to the first output wheel (53), the third freewheel device (52) being mounted in the opposite sense with respect to the first freewheel device (51).

9. Method for operation of an electric bicycle according to one of Claims 1 to 8, comprising the following steps:
a/ when the bicycle is stopped, independently applying a pedal torque and/or an electric motor torque to the rear wheel;
b/ when the bicycle has reached a given speed, and when step a/ has been performed solely by application of a torque from the motor, applying a pedal torque or changing the torque applied from the motor.

10. Method for operation of an electric bicycle according to one of Claims 1 to 8, comprising the following steps when the bicycle is going downhill and/or when at least one of the brake systems of the front wheel or of the rear wheel is actuated:
i/ locking the second freewheel device in such a way that the rotating rear wheel in turn drives the spindle of the rotor of the electric motor;
ii/ recharging the electrical power storage system using the electrical current delivered by the motor.

11. Operating method according to Claim 10, step i/ being implemented by back-pedalling on the pedal crank and/or by manual actuation of the rear-wheel brake lever and/or by actuation of a clutch mechanism that is designed to secure the rear-wheel brake disk to the second freewheel device.
